# EUROPEAN PATENT SPECIFICATION

(11) **EP 2 971 753 B1**
(45) Date of publication and mention of the grant of the patent: **04.09.2019**
(21) Application number: 14720823.5
(22) Date of filing: 14.03.2014
(51) Int. Cl.: F03G 3/00, F03B 13/00, B63B 35/44

(54) **ENERGY STORAGE SYSTEM DEPLOYED IN A BODY OF WATER**
IN EINEM GEWÄSSER EINGESETZTES ENERGIESPEICHERSYSTEM
SYSTÈME DE STOCKAGE D'ÉNERGIE DÉPLOYÉ DANS UNE MASSE D'EAU

(30) Priority: 14.03.2013 US 201361782153 P
(43) Date of publication of application: 20.01.2016
(73) Proprietor: MGH S.A.S., 34000 Montpellier (FR)
(72) Inventor: PEREZ, Richard, Delmar New York 12054 (US); GERMA, Jean-Michel, F-34170 Castelnau-Le-Lez (FR); PEREZ, Marc, F-77300 Fontainebleau (FR)
(74) Representative: IP Trust
(86) International application number: PCT/US2014/027269
(87) International publication number: WO 2014/160522

(56) References cited:
- US-A- 3 369 516
- US-A1- 2009 193 808
- US-A1- 2012 063 262

## Description

### CROSS-REFERENCE TO RELATED APPLICATION

### FIELD OF THE INVENTION

The present invention relates generally to energy storage systems, and more particularly to energy storage systems deployed in a body of water.

An example of such a system is shown in the document US 2009/0193808.

### BACKGROUND OF THE INVENTION

Utility-scale energy storage systems are needed to achieve several interrelated goals of energy generation. These goals include increasing the efficiency of energy generating systems, meeting the varying demands of consumers, and supporting the deployment of alternative, renewable energy generating sources. Many energy storage systems and methods currently exist, these existing systems and techniques suffer from a series of limitations, and are therefore not capable of fully meeting the requirements for utility-scale deployment.

The efficiency of energy generating systems suffers from the fact that electric energy must be used as soon as it has been produced, otherwise the electric energy will be lost. Because demand for electric energy varies during the course of each day, an electric energy generating source may have excess energy during off-peak hours such as the nighttime, and lack required energy during peak hours such as the daytime. By allowing for the storage of excess energy during the off-peak hours, and delivering that stored energy during peak hours, energy storage systems increase the efficiency and value of energy generating systems and the energy they deliver.

Consumers expect electrical energy to be there when they need it. In order to meet this expectation, utility companies must have significant reserve capacity available in the form of stored energy. This energy must be available to be brought on-line within seconds or minutes in order to maintain stability of the electrical power grid.

Renewable energy sources such as wind and solar are desired to reduce dependence on fossil fuels, and thereby reduce the production of greenhouse gases which cause global climate change. However, renewable energy generating sources such as wind and solar require energy storage methods to enable consistent delivery, because of their intermittent nature. In the case of wind farms, output varies dramatically when the wind either increases or decreases. A similar problem plagues solar energy, as passing clouds reduce or eliminate the output of solar energy systems, which already only operate during daylight hours. An energy storage system, working in conjunction with intermittent energy sources such as wind and solar, allows for harvesting intermittent energy for later consistent deployment to the electrical power grid and consumers.

Many types of utility-scale energy storage methods exist to meet the goals of increasing efficiency, meeting consumer demand, and enabling the deployment of alternative renewable energy such as wind and solar. These storage systems include chemical storage in batteries, capacitive electrical storage, mechanical storage in compressed-gas or springs, kinetic energy storage in flywheels, and gravitational potential energy storage in pumped hydro. Even fossil fuels are a form of (non-renewable) energy storage, taking millions of years to store solar energy in plant matter, through natural processes.

Existing methods of energy storage suffer from one or more limitations relating to costs, technology, and environmental concerns. Because of these limitations, energy storage systems have not been able to fully meet the needs of increasing efficiency, meeting consumer demand, and enabling the deployment of alternative renewable energy such as wind and solar.

One group of limitations of existing methods of energy storage relates to installation requirements and costs of a large scale energy storage system. The capital costs of the energy storage method may be too high to be feasible, having costs that outweigh any benefits from the method. In addition, the siting requirements of the method may be too restrictive to be commercially viable or even possible in a given environment or location. For example, a given site may not be suitable for building a large reservoir for pumped hydro energy storage due to local regulations protecting the environment. As population density increases, finding sites capable of supporting a large scale utility grade deployment has become increasingly problematic. Furthermore, the storage method may not be scalable to meet the needs of a typical utility installation. For example, chemical batteries take up a significant amount of space per stored kilowatt.

Other limitations arise based on the underlying technology of the energy storage method. One common limitation is that the number of charge/discharge cycles that the method supports may not be high enough to support a utility-grade application. This is the case with, for example, chemical batteries, which must be periodically replaced at great cost. In addition, the stored energy may degrade over time, such as with flywheels that gradually lose energy due to friction from the moving components.

In addition, environmental concerns arise with currently available energy storage systems. For example, pumped hydro systems operate by pumping water from a lower elevation reservoir to a higher elevation reservoir. These large reservoirs are typically built on land, displacing the pre-existing ecosystem. As another example, chemical batteries, which have a limited lifecycle, pose an environmental disposal issue at their end of life.

Taking into consideration the needs for energy storage systems along with the limitations of existing systems, an energy storage system is needed that increases efficiency of energy generation, meets varying consumer demand, and enables the deployment of alternative renewable energy such as wind and solar, and do not suffer from limitations related to costs, scalability, and environmental impacts.

### BRIEF SUMMARY

The shortcomings of the prior art are overcome and additional advantages are provided through the provision, in one aspect, of a system for storing and releasing energy. The system is deployed in a body of water, and includes a platform. The system also includes at least one weight stored (e.g., positioned) on a floor of the body of water, and a hoist system capable of moving the at least one weight between a first elevation position and a second elevation position. A remotely operated attachment device of the system is coupled to the hoist system, and is configured to locate and couple to the at least one weight on the floor of the body of water. The hoist system selectively raises and lowers the at least one weight when coupled to the remotely operated attachment device, from the first elevation position to the second elevation position. The system stores and releases energy when the at least one weight moves between the first elevation position and the second elevation position.

Additional features and advantages are realized through the techniques of the present invention. Other embodiments and aspects of the invention are described in detail herein and are considered a part of the claimed invention.

### BRIEF DESCRIPTION OF THE SEVERAL VIEWS OF THE DRAWINGS

One or more aspects of the present invention are particularly pointed out and distinctly claimed as examples in the claims at the conclusion of the specification. The foregoing and other objects, features, and advantages of the invention are apparent from the following detailed description taken in conjunction with the accompanying drawings in which:
FIG. 1 is a block diagram of a system for storing and releasing energy, in accordance with one or more aspects of the present invention;
FIG. 2 depicts a system for storing and releasing energy deployed in a body of water, in accordance with one or more aspects of the present invention;
FIG. 3 depicts one embodiment of a platform of the system, in accordance with one or more aspects of the present invention;
FIG. 4 depicts other embodiments of platforms of the system, in accordance with one or more aspects of the present invention;
FIG. 5 depicts embodiments of hoist systems, in accordance with one or more aspects of the present invention;
FIG. 6 depicts embodiments of hoist systems, which may include winches, in accordance with one or more aspects of the present invention;
FIG. 7 depicts one embodiment of a remotely operated attachment device, in accordance with one or more aspects of the present invention;
FIG. 8 depicts patterns defined by a plurality of weights on the floor of the body of water, in accordance with one or more aspects of the present invention;
FIG. 9 depicts configurations to store and prepare weights, in accordance with one or more aspects of the present invention;
FIG. 10 depicts one embodiment of a weight, in accordance with one or more aspects of the present invention;
FIG. 11 depicts a top view of up-weight management, in accordance with one or more aspects of the present invention;
FIG. 12 depicts an embodiment of a weight for use with the up-weight management of FIG. 11, in accordance with one or more aspects of the present invention; and
FIG. 13 depicts an embodiment of a platform with up-weight management, in accordance with one or more aspects of the present invention.

### DETAILED DESCRIPTION

Aspects of the present invention and certain features, advantages, and details thereof, are explained more fully below with reference to the non-limiting embodiments illustrated in the accompanying drawings. Descriptions of well-known materials, fabrication tools, processing techniques, etc., are omitted so as to not unnecessarily obscure the invention in detail. It should be understood, however, that the detailed description and the specific examples, while indicating embodiments of the invention, are given by way of illustration only, and are not by way of limitation. Various substitutions, modifications, additions and/or arrangements within the scope of the underlying inventive concepts will be apparent to those skilled in the art from this disclosure.

The present disclosure provides a system for harvesting, storing and generating energy. In one aspect, a system is provided for a platform supporting machinery to convert received energy into potential energy, store that potential energy, and at a later time convert that potential energy into electrical energy. In one embodiment, the system includes a platform floating, submerged, or semi-submerged in, for example, the ocean, a lake or other body of water. As used herein, the term platform refers to any structure or structures, such as a floating submersible or semi-submersible vessel, barge, ship, other structure, or combination thereof. In an embodiment, the platform may be adapted to support one or more weights suspended from a tension member or cable. The weights are lifted up against gravity by one or more hoist systems (e.g., winches or pulley devices) and lowered down by gravity from a first elevation position to a second elevation position. In one specific example, the hoist system may include a winch, a spooling drum, a motor and a generator. In another example, the hoist system may be any generic lifting system. The generator is coupled to the weight through the tension member to generate electricity upon movement of the weight with gravity from the first to the second elevation position. In one example, a heave compensator may be used in addition to the tension member, depending on the specific environmental conditions within the body of water. Stored energy is released when the weight is lowered. The lowering of the weight drives the motor/generator to produce electrical energy. In one embodiment, this may be achieved by turning a drum of a winch. The electrical energy may then be conditioned for transmission by, for example, a power grid.

In one embodiment, the one or more weights may be stored near the platform or loosely residing on the floor of the body of water without attachment to the tension member. A single tension member or cable could be used for multiple weights stored on, for example, the floor of the body of water. The tension member is wound around a spooling drum or pulley and is adapted to facilitate multiple operations, such as, for example, lowering one weight to the floor of the body of water and raising another weight to the platform.

In another embodiment, the system includes a dynamic management of the weights through, for example, a wireless positioning system. The wireless positioning system is capable of, for example, signaling the position and identification of each weight stored on the floor of the body of water. In one aspect, the system employs one or more remotely operated attachment device ("ROAD") attached to an end of the tension member. In an embodiment, a ROAD is capable of moving in three dimensions and rotating around three axes and used to seek and retrieve one of the weights stored on the floor of a body of water. A small number of ROADs, for example, less than one per hoist system, may be used, and deployed as needed to retrieve or position weights. In another example, the ROADs may also be used for up-weight management, for example, positioning weights at an elevation above the floor of the body of water.

Reference is made below to the drawings, which are not drawn to scale for reasons of understanding, wherein the same reference numbers used throughout different figures designate the same or similar components. In addition, different reference numbers having the same last two digits may designate the same or similar components.

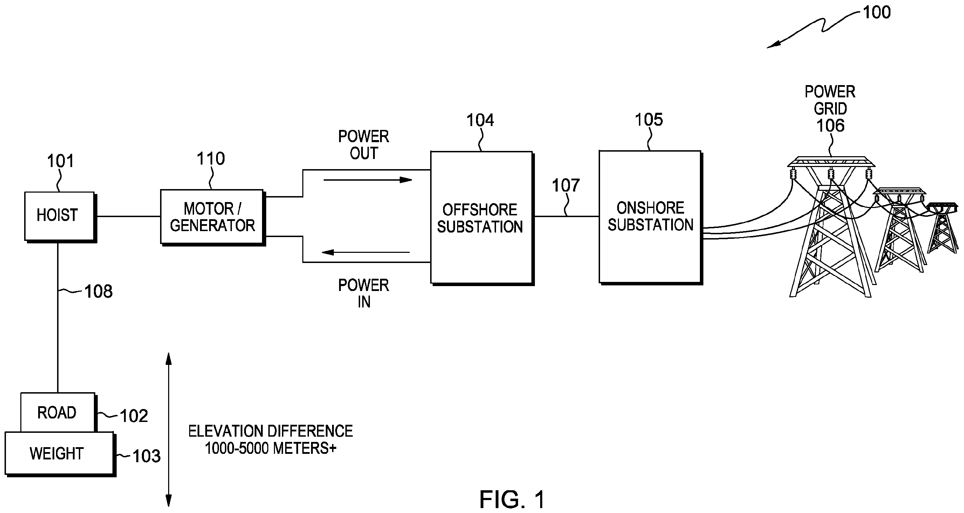

FIG. 1 is a block diagram of a system 100 for storing and releasing energy, in accordance with one or more aspects of the present invention. In the illustrated embodiment, system 100 includes a hoist system 101 capable of moving at least one weight 103 between a first elevation position and a second elevation position. In one example, the first elevation position and the second elevation position are separated by between 1,000 and 5000 meters.

As illustrated, in an embodiment, a remotely operated attachment device ("ROAD") 102 is coupled to the hoist system 101, and is configured to locate and couple to at least one weight 103 on the floor of the body of water. ROAD 102 may also be configured to identify at least one weight 103. Hoist system 101 selectively raises and lowers at least one weight 103 when coupled to ROAD 102 from the first elevation position to the second elevation position. System 100 stores and releases energy when at least one weight 103 moves between the first elevation position and the second elevation position.

In an embodiment, system 100 includes a motor/generator 110 operatively coupled to hoist system 101. In such an embodiment, motor/generator 110 (e.g., a motor component of motor/generator 110) uses energy (e.g., electrical energy) to move at least one weight 103 from the lower first elevation position to the higher second elevation position, and the electrical energy is stored in the form of gravitational potential energy of at least one weight 103.

Similarly, system 100 generates energy (e.g., electrical energy) when at least one weight 103 moves from the higher second elevation position to the lower first elevation position (e.g., using a generator component of motor/generator 110). System 100 may release energy to a power grid 106 through motor/generator 110.

In operation, system 100 may be used to store energy during off-peak energy consumption times, when extra energy may be present in the power grid. Subsequently, during peak energy consumption times, system 100 may be used to release energy to the power grid. Such operation facilitates optimum utilization of power across a distributed power grid or system.

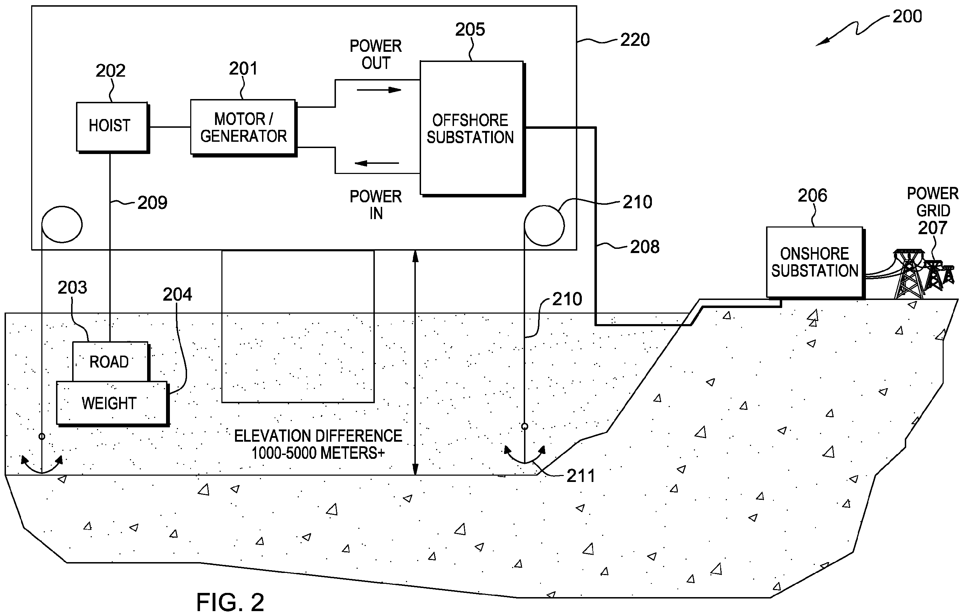

FIG. 2 depicts a system 200 for storing and releasing energy deployed in a body of water, in accordance with one or more aspects of the present invention. In the illustrated embodiment, system 200 includes a platform 220. According to the present invention, platform 220 is capable of moving over the body of water. Movement of platform 220 may be achieved through a propulsion system located in a lower portion 230 of platform 220. System 200 is configured to locate and couple to weights 203. Multiple weights 203 may be located at different locations, identified by appropriate coordinates, on the floor of the body of water. In one example, the propulsion system may include rudders or steering flaps. In another example, the propulsion system may be located on, or above the platform.

In an embodiment, system 200 includes an offshore substation 205, and an onshore substation 206 is located on the shore, beyond the body of water, for example, closer to power grid 207. The offshore substation 205 and onshore substation 206 facilitate system 200 storing and releasing energy, and may use any appropriate energy transmission techniques, for example, direct current or high voltage alternating current transmission lines.

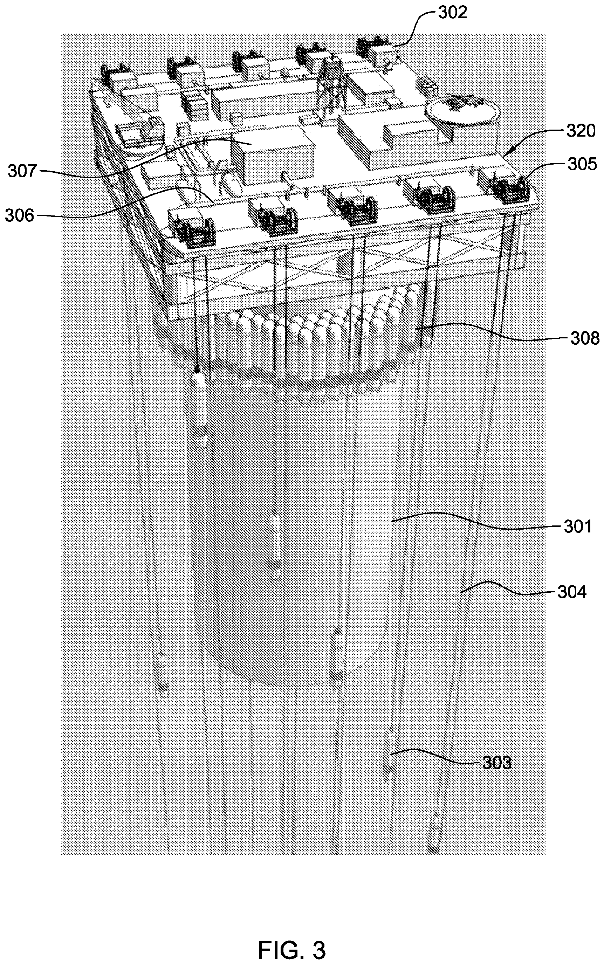

FIG. 3 depicts one embodiment of a platform 320 of a system for storing and releasing energy, in accordance with one or more aspects of the present invention. Platform 320 may include one or more hoist systems, and in the illustrated embodiment, ten hoist systems are depicted. As illustrated, in one specific example only, the hoist systems each include a tension member 304 and a winch system 305.

In an embodiment, tension member 304 has a length with a first end and a second end, and is capable of supporting at least one weight 303 coupled thereon, and for movement between a first elevation position (e.g., the floor of the body of water) and a second elevation position (e.g., the platform). By way of example, and not limitation, in this illustrative embodiment, winch system 305 is mounted on platform 320. Platform 320 may be a vessel or any other floating structure, for example. Winch system 305 is operatively coupled to the first end of tension member 304, and is configured for adjusting the length of tension member 304 in a controlled fashion. For example, winch system 305 may be used in conjunction with tension member 304 to retrieve weight 303 from the floor of the body of water and store weight 303. As illustrated, system 300 corresponds to a winch system without a winding drum, where both ends of the tension member can carry weights alternatively.

Continuing with FIG. 3, in the illustrated embodiment, platform 320 includes an up-weight management system, configured to store and prepare a plurality of weights 303. To store and prepare the weights, the up-weight management system may manipulate and/or move the weights. For example, weights 303 may be stored on a rail system. As energy is to be delivered to the power grid, during peak energy consumption time, weights 303 will be positioned at any of the multiple hoists, and lowered to the floor of the body of water in a controlled fashion. This allows the gravitational potential energy of the weights to be translated into electrical energy using one or more motor/generators, which are deployed in association with the hoist systems. The up-weight management system is configured to attach and detach plurality of weights 303 to and from the hoist system, and specifically to attach the weights to sequentially lower each of the weights from platform 320 to the floor of the body of water. In one configuration, the weights are arranged in a floating grape pattern 308.

In one example, the multiple hoists operate in an overlapping manner, so that he energy delivered by the system to the power grid is substantially even. In another example, an offshore substation may be used to condition the generated energy, by for example, modifying the voltage or current properties, before delivery to an onshore substation, en route to the power grid.

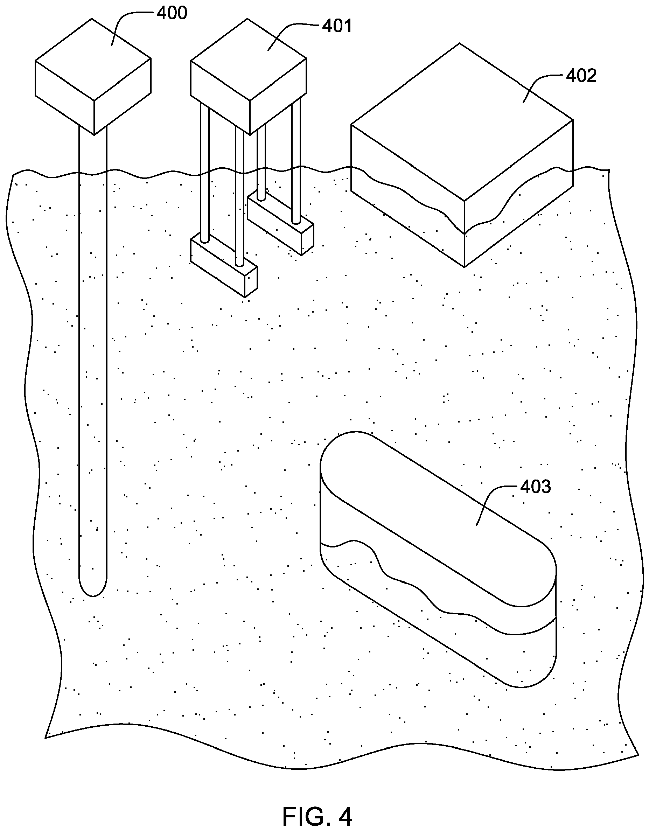

FIG. 4 depicts other embodiments of platforms of a system for storing and releasing energy, in accordance with one or more aspects of the present invention. These embodiments are given by way of example, and certain aspects of one or more such embodiments may be combined to provide a platform of the system of the present invention. Aspects of the various embodiments may be applicable depending on deployment conditions, and may be used to minimize wave induced motion and drag in the case of a mobile platform. Any of these platforms may be designed to include a propulsion system, so that the platform may be either fully mobile, or have a constrained range of motion, for example, being able to move in a circular, curved, or linear path. In other examples, the motion of the platform may be as precise as needed, or the platform may be maintained dynamically in a fixed position.

In one embodiment, a single point anchored reservoir like ("SPAR-like") platform 400 may be used. SPAR-like platform 400 includes a large cylindrical portion supporting a deck portion. The cylinder may be weighted at the bottom using a material with a density greater than the density of water, resulting in a center of gravity of SPAR-like platform 400 located lower on the structure. Advantageously, a SPAR-like platform may minimize motion relative to waves or current. In other examples of platforms, the platform need not be an anchored system, nor have a reservoir.

In another embodiment, a semisubmersible platform 401 may be used. Semisubmersible platform 401 obtains its buoyancy from pontoon portions located below the surface of the body of water, and thereby avoiding wave action at the surface to provide good stability.

In a further embodiment, a very large variable ballasted multipurpose mega platform 402 may be deployed. Mega platform 402 may be used to support a large scale embodiment of the system of the present invention. In one example, mega platform 402 may allow for flexible deployment in various depth bodies of water, and allow for co-location of other functions or facilities with a system for storing and releasing energy.

In another embodiment, a platform in the style of floating production storage and offloading ("FPSO-like") unit may be used. FPSO-like platform 403 may be preferred in certain applications where speed and/or ease of deployment is an issue. In one example, FPSO-like platform 403 may be constructed from a converted oil tanker or other ship, or may be purpose built.

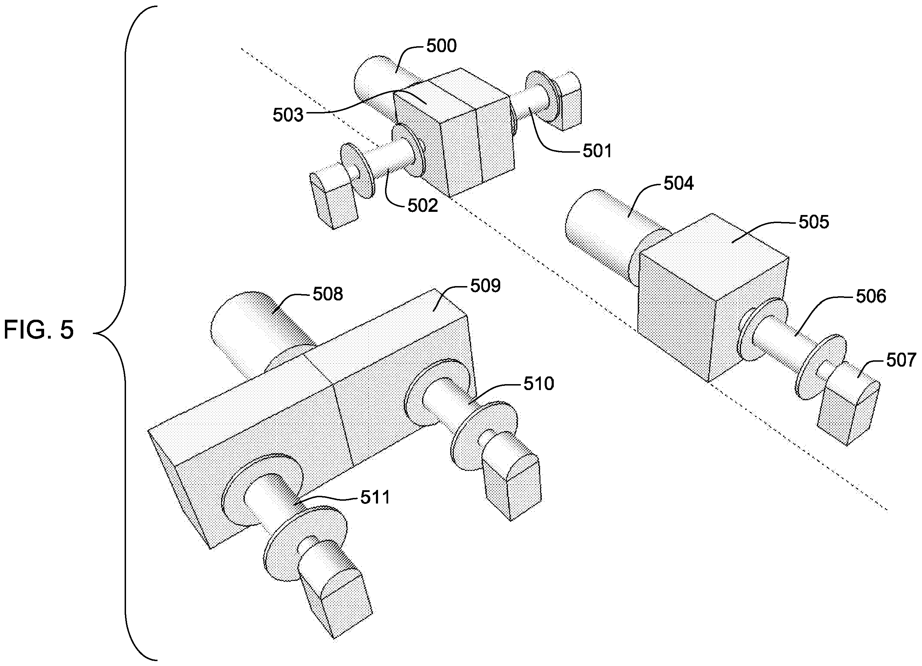

FIG. 5 depicts embodiments of hoist systems, in accordance with one or more aspects of the present invention.

As illustrated, a double winch embodiment, which includes, two winches 501, 502, may operate with a single motor/generator. In such a configuration, one end of the tension member could be attached to the winch axis, and the tension member would roll up around the winch when the tension member was in the up position. In such a configuration, the two winches may operate together with a clutch 503 to allow for continuous operation. For example, in releasing energy, winch 501 may be attached to a first weight, which may be lowered in a controlled fashion, allowing motor/generator to generate electric energy. As soon as the first weight reaches the floor of the body of water, a second weight may begin descending using winch 502. In such a manner, a continuous flow of energy may be delivered by the motor/generator to the power grid. In the illustrated embodiment, winches 501, 502 are co-linear. In another example a double winch system having two winches 501, 502 may be configured to be parallel to one another.

In another embodiment, each end of a tension member could be configured for attachment to a ROAD, allowing continuous operation. In addition, a gear box 505 may be included to allow differential rotational rates of the winches and the motor/generator. For example, such a configuration may allow higher speed rotation of the generator, to deliver appropriately conditioned power to the offshore substation. In another example, the winches could include a passive or active heave compensation system. In a further example, heave compensation may be performed or facilitated by the ROAD.

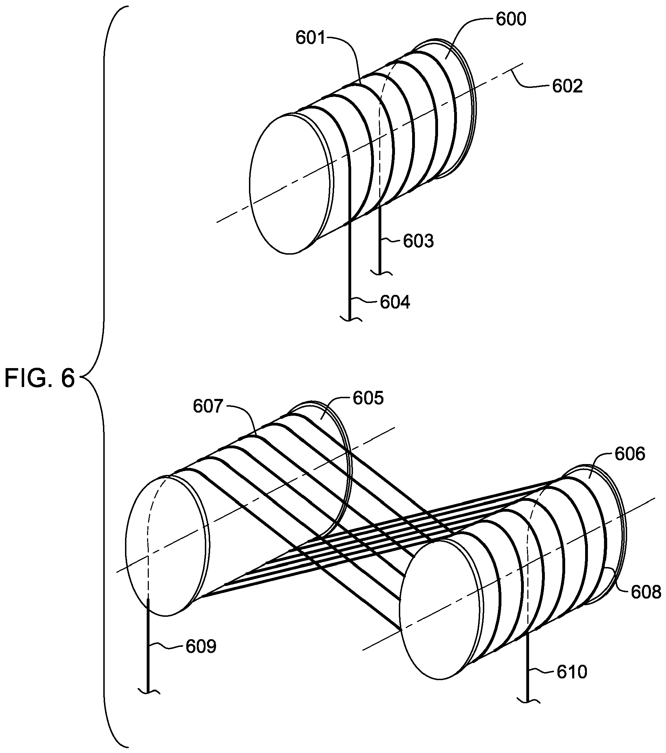

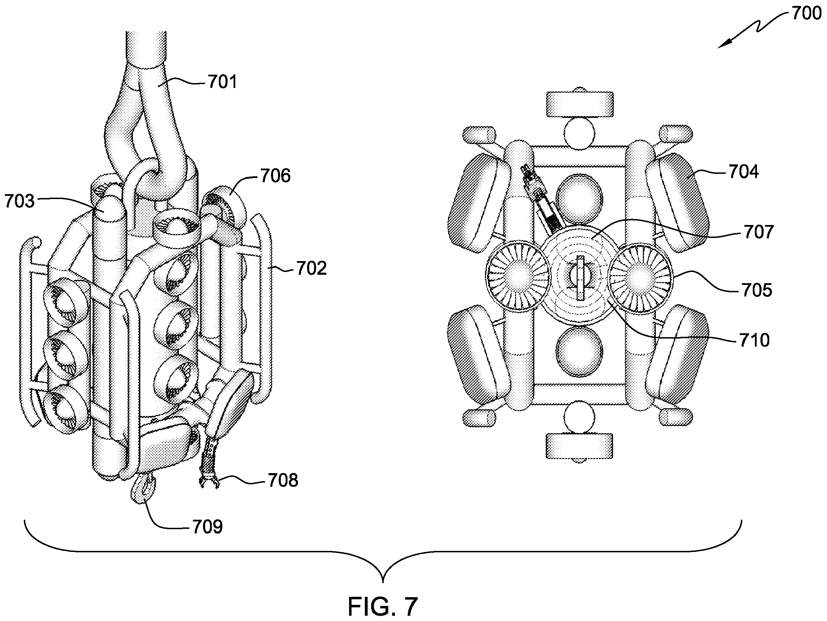

FIG. 6 depicts embodiments of winches, in accordance with one or more aspects of the present invention. As illustrated, in one embodiment, a single winch solution may include a single drum 600. Drum 600 may have an elliptical cross-section. Tension members 603, 604 may extend from drum 600. In another embodiment, a single winch solution may include two or more drums 606, 607. Two or more drums may be preferred to increase reliability and robustness of the winch system and tension members 609, 610. In one specific implementation, a remotely operated attachment device (see FIG. 7A) may be deployed on each end of the tensions members. For example, two ROADs may be deployed in conjunction with drum 600, one on each of tension members 603, 604. In another example, the system could operate without a winding drum, i.e., with each end of the tension member capable of lifting/lowering weights, with a hook system and/or ROAD acting as a counter weight. In a further example, a non-winch system may be used.

FIG. 7 depicts one embodiment of a remotely operated attachment device 700, in accordance with one or more aspects of the present invention. In the illustrated embodiment, ROAD 700 is configured to move with respect to the platform to facilitate locating, coupling, and raising a plurality of weights from the floor of the body of water. In order to raise or lower to the floor of the body of water, ROAD 700 couples to one or more hoist systems using coupler 701.

In an embodiment, ROAD 700 includes an autonomous energy source and a propulsion system capable of maneuvering within the body of water. ROAD 700 includes one or more thrusters 706 for maneuvering in three dimensions. For example, ROAD 700 can maneuver through the use of thrusters 706 which operate in the x-direction, y-direction, and rotational-direction. In an example where the platform of the system is mobile, ROAD 700 may move relative to the platform in order to facilitate locating and coupling to a plurality of weights stored on the floor of the body of water.

In another embodiment, ROAD 700 includes a weight detection device 704. Weight detection device 704 is capable of detecting the at least one weight on the floor of the body of water, and in one example, may include a sonar system. In other examples, weight detection device 704 may be any other detection device, and may use optical, radio, laser, or other technologies to detect weights. For example, ROAD 700 may locate the at least one weight using a wireless positioning system 703. In such a case, wireless positioning system 703 may include a transmitter associated with ROAD 700 communicating with a receiver associated with the at least one weight, and the system could include positioning beacons on the floor of the body of water. In other examples, ROAD 700 may communicate with the platform's supervisory control and data acquisition systems to receive instructions or send data, or ROAD 700 may be programmed for autonomous operations.

In a further embodiment, ROAD 700 includes an active hook system 709 designed to interconnect with a passive hook located on the at least one weight. When ROAD 700 connects to the weight, ROAD 700 may use an activator 708 to activate the weights air intake or release valves.

In the illustrated embodiment, ROAD 700 includes an adjustable ballast 710. Using adjustable ballast 710, the weight of ROAD 700 may be matched to allow optimum operation of the hoist system.

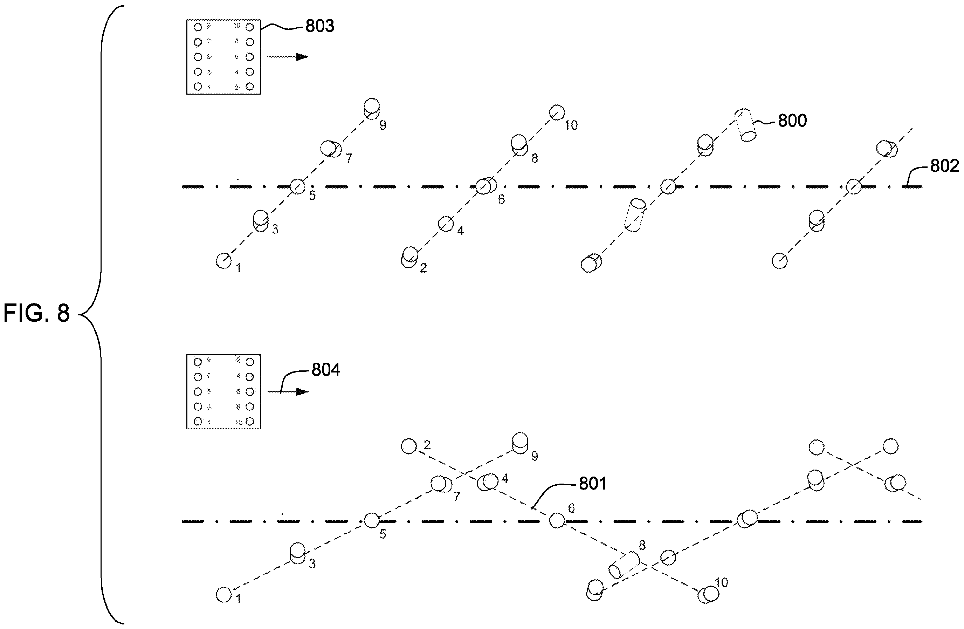

FIG. 8 depicts patterns defined by a plurality of weights on the floor of the body of water, in accordance with one or more aspects of the present invention. As illustrated in the figures, the platforms, which are rectangular, may have ten hoist systems, numbered 1 through 10, similar to the platform described with respect to FIG. 3. In the illustrated embodiment, five hoist systems are each located on opposite edges of the platforms. In other embodiments, any number of hoist systems may be located in any given configuration on platform.

In one example, platform 803 moves over the body of water, in a direction from left to right, and the system is configured to lower a plurality of weights from platform 803 to the floor of the body of water. In this depicted example, the system sequentially lowers the odd numbered weights and then the even numbered weights, to define a pattern on the floor of the body of water. The movement of platform 803 facilitates definition of the pattern of the plurality of weights on the floor of the body of water. In another example, the system may operate in reverse, and locate and raise the weights, which were previously lowered, using the pattern.

In another example, the system is configured to locate a plurality of weights located on the floor of the body of water in another pattern, raise the plurality of weights from the floor of the body of water to a platform 804, and store the plurality of weights on platform 804 in a second pattern. In such a case, a ROAD may be configured to move with respect to platform 804 to facilitate locating, coupling, and raising the plurality of weights from the floor of the body of water. In one implementation, the weights may be stored floating freely on the surface of the body of water. In another implementation, the weights may be stored on a secondary light weight vessel which could be either be located on the surface or designed to operate slightly below the surface, for instance, underneath the action of waves and weather.

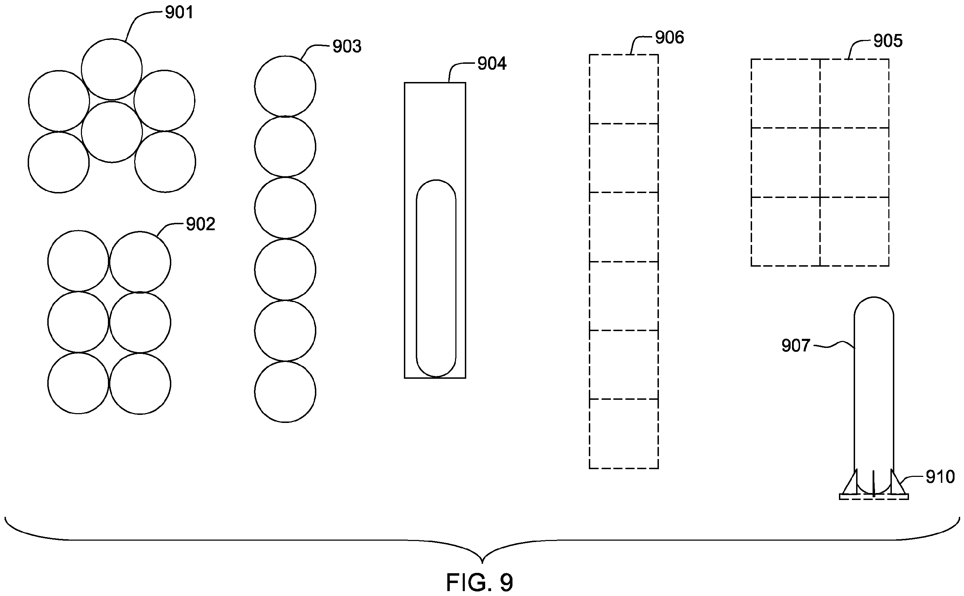

FIG. 9A-9B depict configurations (e.g., patterns) to store and prepare weights, in accordance with one or more aspects of the present invention. These patterns may be selected for a configuration of a system for storing and releasing energy that includes a fixed platform. In such a case, ROADs may be employed to move the weights into their final positions.

FIG. 9 depicts different bottle rack configurations using mechanical structures to hold weights in place. Structure 901 can store weights in a close packed pattern, structure 902 can store weights in parallel rows, and structure 903 can store weights in a single row. Other configurations may not have a structure, and may make use of weight(s) 907 that have stabilizers 910 or have an appropriate shape and weight distribution profile to allow for storage without the need for a mechanical structure.

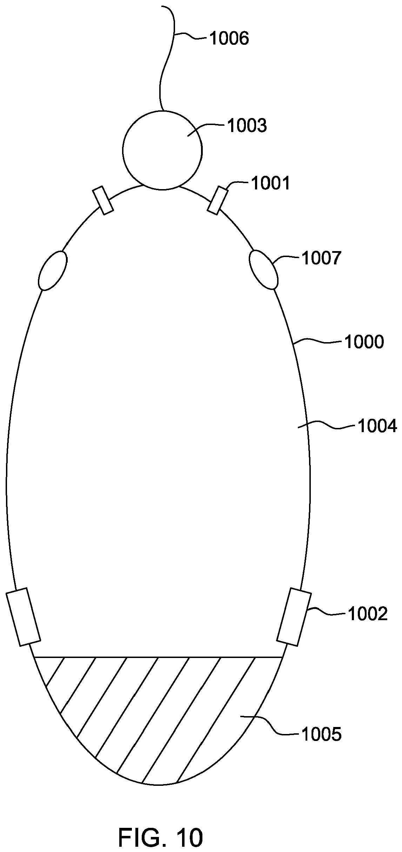

FIG. 10 depicts one embodiment of a weight 1000, in accordance with one or more aspects of the present invention. In the illustrated embodiment, weight 1000 is shaped to contain and control an air ballast so as to be substantially buoyant. In such an embodiment, valves 1001 allow weight 1000, and in particular chamber 1004, to be filled with air and valves 1002 to allow water to flood or be evacuated from weight 1000. In one example, weight 1000 may include multiple chambers to facilitate synchronization operations. The valves may be activated from a device at the platform or from the ROAD. As depicted, weight 1000 is shaped to minimize drag forces during movement within the body of water. In another example, the weights may be shaped and/or structured to promote an upright resting position on the floor of the body of water. In an embodiment, weight 1000 includes a portion 1005 of dense material located on its lower end, in order to lower its center of gravity, to facilitate weight 1000 standing upright on the floor of the body of water. It should be understood that, in order to minimize system costs, weight 1000 can be made of low cost, but long lasting materials, such as concrete or other available filler materials. In one specific example, weight 1000 may be between 200 and 1000 tons, and may be designed to be raised and lowered at a rate of between 0.5 and 3 m/s.

In order to facilitate operations within the system for storing and releasing energy, in one embodiment, weight 1000 includes a SONAR system 1007 and a passive hook system 1003 which allows a ROAD to identify, locate and couple to weight 1000. In other examples, weight 1000 may include a passive breaking system. To facilitate identification, weight 1000 may include a unique ID tag.

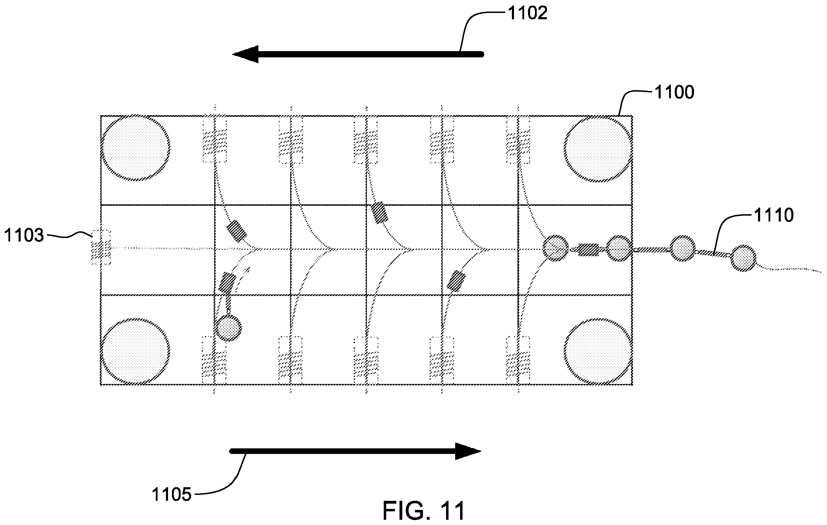

FIG. 11 depicts a top view of up-weight management, in accordance with one or more aspects of the present invention. Two different approaches to up-weight management may be used. In the first approach, the weights may be only partially buoyant, in which case the platform, an extension thereof, or a detached structure, can be used to store the weight in the upwards position. In the second approach, the weights may be fully buoyant. In such a case, the weights may be able to float on the surface of the body of water on their own.

In embodiment illustrated in FIG. 11, a platform 1100 may be moving in a direction opposite a current in the body of water. The up-weight management system may consist of a passive link 1101 between each weight and platform 1100, and weights 1110 may be configured to trail behind platform 1100 as they are raised from the floor of the body of water when energy is being stored by the system. For example, in one configuration, weights could be entirely unattached to the platform and allowed to drift. Subsequently, the weights may be identified, located, and gathered as needed, using for example, a ROAD or ROAD-like device.

During energy releasing operation of the system, a low duty hoist 1103 may be used to recall the floating weights to platform 1100, and to the hoist systems designed to lower the weights to the floor of the body of water to release energy.

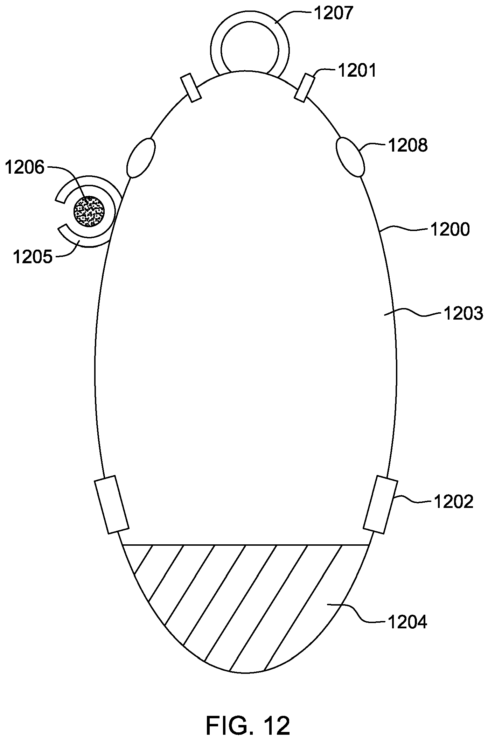

FIG. 12 depicts another embodiment of a weight for use with the up-weight management techniques described with respect to FIG. 11. As illustrated, weight 1200 includes an active system 1205 to connect weight 1200 to a tracking system for storage on a platform, in the upright position. In one example, a service boat may be used to connect and disconnect weight 1200 from a railing system 1206 (depicted in cross section). In another example, any of a variety of mechanisms, such as mechanisms typically employed in ski-lifts, to manage the various cabins, may be used to manage weights 1200.

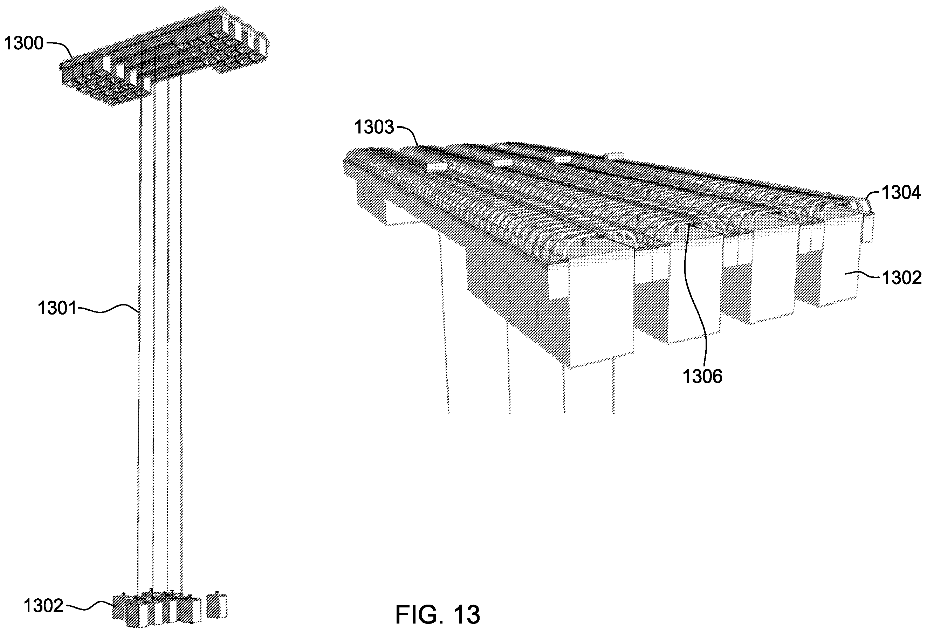

FIGS. 13 depicts an embodiment of a platform 1300 with up-weight management, in accordance with one or more aspects of the present invention. In the embodiment illustrated in FIG. 13, tension members 1301 are used to raise and lower a plurality of weights 1302 from the floor of the body of water to platform 1300. As illustrated, a railing system 1304 may be used to store the plurality of weights 1302 in an upright position.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has" and "having"), "include" (and any form of include, such as "includes" and "including"), and "contain" (and any form contain, such as "contains" and "containing") are open-ended linking verbs. As a result, a method or device that "comprises", "has", "includes" or "contains" one or more steps or elements possesses those one or more steps or elements, but is not limited to possessing only those one or more steps or elements. Likewise, a step of a method or an element of a device that "comprises", "has", "includes" or "contains" one or more features possesses those one or more features, but is not limited to possessing only those one or more features. Furthermore, a device or structure that is configured in a certain way is configured in at least that way, but may also be configured in ways that are not listed.

The corresponding structures, materials, acts, and equivalents of all means or step plus function elements in the claims below, if any, are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and of the invention. The embodiment was chosen and described in order to best explain the principles of one or more aspects of the invention and the practical application, and to enable others of ordinary skill in the art to understand one or more aspects of the invention for various embodiments with various modifications as are suited to the particular use contemplated.

## Claims

1. A system (200) for storing and releasing energy, wherein said system is deployed in a body of water, said system comprising:
a platform (220);
multiple weights (204) stored on a floor of the body of water;
a hoist system (202), said hoist system capable of moving at least one weight between a first elevation position and a second elevation position; and
a remotely operated attachment device (203) coupled to said hoist system (202), said remotely operated attachment device configured to locate and couple to at least one weight on the floor of the body of water,
said hoist system (202) selectively raises and lowers at least one weight (204) when coupled to said remotely operated attachment device (203) from the first elevation position to the second elevation position,
said system stores and releases energy when at least one weight moves between the first elevation position and the second elevation position,
**characterised in that** said platform is capable of moving over the body of water so that said multiple weights may be located at different locations on the floor of the body of water.

2. The system of claim 1, wherein said platform is capable of moving over the body of water and said system is configured to locate and couple to a first weight of said at least one weight located at first coordinates on the floor of the body of water and a second weight of said at least one weight located at second coordinates on the floor of the body of water.

3. The system of claim 1, wherein said hoist system comprises:
a tension member having a length with a first end and a second end, said tension member capable of supporting said at least one weight when said at least one weight is coupled to said tension member for movement between the first elevation position and the second elevation position; and
a winch system mounted on said platform, said winch system operatively coupled to the first end of said tension member, said winch system configured for adjusting the length of the tension member in a controlled fashion.

4. The system of claim 1, wherein the first elevation position is lower than the second elevation position, and said system further comprises:
a motor/generator, said motor/generator operatively coupled to said hoist system, wherein said motor/generator stores energy in moving said at least one weight from the first elevation position to the second elevation position and generates the energy in moving said at least one weight from the second elevation position to the first elevation position.

5. The system of claim 4, wherein said system releases the energy to a power grid through said motor/generator.

6. The system of claim 1, wherein said system is configured to locate a plurality of weights located on the floor of the body of water in a first pattern, raise said plurality of weights from the floor of the body of water to said platform, and store said plurality of weights on said platform in a second pattern.

7. The system of claim 6, wherein said platform is configured to move over the body of water to positions over the first pattern of the plurality of weights.

8. The system of claim 7, wherein said remotely operated attachment device is configured to move with respect to said platform to facilitate locating, coupling, and raising said plurality of weights from the floor of the body of water.

9. The system of claim 1, wherein said system is configured to lower a plurality of weights from said platform to the floor of the body of water, wherein said plurality of weights define a pattern on the floor of the body of water.

10. The system of claim 9, wherein said platform is configured to move over the body of water to facilitate defining the pattern of the plurality of weights on the floor of the body of water.

11. The system of claim 1, wherein said remotely operated attachment device comprises a propulsion system, said propulsion system capable of maneuvering said remotely operated attachment device within the body of water.

12. The system of claim 1, wherein said remotely operated attachment device comprises a weight detection device, said weight detection device capable of detecting said at least one weight on the floor of the body of water.

13. The system of claim 1, wherein said remotely operated attachment device locates said at least one weight using a wireless positioning system.

14. The system of claim 13, wherein said wireless positioning system comprises a transmitter associated with said remotely operated attachment device communicating with a receiver associated with said at least one weight.

15. The system of claim 14 wherein said wireless positioning system further comprises positioning beacons on the floor of the body of water.

16. The system of claim 1, wherein said at least one weight is shaped to contain and control an air ballast so as to be substantially buoyant.

17. The system of claim 1, wherein said at least one weight is shaped to minimize drag forces during movement between the first and second elevation positions.

18. The system of claim 1 , wherein said platform comprises an up-weight management system, said up-weight management system configured to store and prepare a plurality of weights of said at least one weight.

19. The system of claim 18, wherein said up-weight management system is configured to attach and detach said plurality of weights to and from said hoist system.

20. The system of claim 18, wherein said system is configured to sequentially lower each of said plurality of weights from said platform to the floor of the body of water.

## Patentansprüche

1. Ein System (200) zum Speichern und Freigeben von Energie, wobei das genannte System in einem Gewässer umgesetzt ist, wobei das genannte System umfasst: eine Plattform (220);
zahlreiche Gewichte (204), die auf einem Boden des Gewässers gespeichert sind; ein Hebezeugsytem (202), wobei das genannte Hebezeugsytem zum Bewegen wenigstens eines Gewichts zwischen einer ersten Erhöhungsposition und einer zweiten Erhöhungsposition geeignet ist; und
eine entfernt betriebene Befestigungsvorrichtung (203), die an dem genannten Hebezeugsystem (202) gekoppelt ist, wobei die genannte entfernt betriebene Befestigungsvorrichtung zum Orten und Koppeln an wenigstens einem Gewicht auf dem Boden des Gewässers gestaltet ist,
wobei das genannte Hebezeugsystem (202) selektiv wenigstens ein Gewicht (204) hebt und senkt, wenn es an der genannten entfernt betriebenen Befestigungsvorrichtung (203) von der ersten Erhöhungsposition zu der zweiten Erhöhungsposition gekoppelt ist,
wobei das genannte System Energie speichert und freisetzt, wenn wenigstens ein Gewicht sich zwischen der ersten Erhöhungsposition und der zweiten Erhöhungsposition bewegt,
**dadurch gekennzeichnet, dass** die genannte Plattform zum Bewegen über dem Gewässer derart geeignet ist, dass die genannten zahlreichen Gewichte an unterschiedlichen Stellen auf dem Boden des Gewässers angeordnet sein können.

2. System gemäß Anspruch 1, wobei die genannte Plattform zum Bewegen über dem Gewässer geeignet ist und das genannte System zum Orten und Koppeln an einem ersten Gewicht des genannten wenigstens einen Gewichts gestaltet ist, das an ersten Koordinaten auf dem Boden des Gewässers angeordnet ist, und ein zweites Gewicht des genannten einen Gewichts an zweiten Koordinaten auf dem Boden des Gewässers angeordnet ist.

3. System gemäß Anspruch 1, wobei das genannte Hebezeugsystem umfasst:
ein Spannungselement mit einer Länge mit einem ersten Ende und einem zweiten Ende, wobei das genannte Spannungselement zum Stützen des genannten wenigstens einen Gewichts geeignet ist, wenn das genannte wenigstens eine Gewicht an das genannte Spannungselement zur Bewegung zwischen der ersten Erhöhungsposition und der zweiten Erhöhungsposition gekoppelt ist; und
ein Windensystem, das auf der genannten Plattform montiert ist, wobei das genannte Windensystem betriebsbereit an dem ersten Ende des genannten Spannungselements gekoppelt ist, wobei das genannte Windensystem zum Anpassen der Länge des Spannungselements auf kontrollierte Weise gestaltet ist.

4. System gemäß Anspruch 1, wobei die erste Erhöhungsposition niedriger ist als die zweite Erhöhungsposition und das genannte System weiterhin umfasst:
einen Motor/Generator, wobei der genannte Motor/Generator betriebsbereit an das genannte Hebezeugsystem gekoppelt ist, wobei der genannte Motor/Generator Energie beim Bewegen des genannten wenigstens einen Gewichts von der ersten Erhöhungsposition zu der zweiten Erhöhungsposition speichert und die Energie beim Bewegen des genannten wenigstens einen Gewichts von der zweiten Erhöhungsposition zur ersten Erhöhungsposition erzeugt.

5. System gemäß Anspruch 4, wobei das genannte System die Energie durch den genannten Motor/Generator an ein Energieversorgungsnetz freisetzt.

6. System gemäß Anspruch 1, wobei das genannte System zum Orten einer Vielzahl von Gewichten gestaltet ist, die auf dem Boden des Gewässers in einem ersten Muster zum Erhöhen der genannten Vielzahl von Gewichten vom Boden des Gewässers auf die genannte Plattform und Speichern der genannten Vielzahl von Gewichten auf der genannten Plattform in einem zweiten Muster angeordnet sind.

7. System gemäß Anspruch 6, wobei die genannte Plattform zum Bewegen über dem Gewässer zu Positionen über dem ersten Muster der Vielzahl von Gewichten gestaltet ist.

8. System gemäß Anspruch 7, wobei die genannte entfernt betriebene Befestigungsvorrichtung zum Bewegen in Bezug auf die genannte Plattform zum Erleichtern der Ortung, Kupplung und Erhöhung der genannten Vielzahl von Gewichten vom Boden des Gewässers gestaltet ist.

9. System gemäß Anspruch 1, wobei das genannte System zum Senken einer Vielzahl von Gewichten von der genannten Plattform zum Boden des Gewässers gestaltet ist, wobei die genannte Vielzahl von Gewichten ein Muster auf dem Boden des Gewässers definiert.

10. System gemäß Anspruch 9, wobei die genannte Plattform zum Bewegen über dem Gewässer zum Erleichtern der Definition des Musters der Vielzahl von Gewichten auf dem Boden des Gewässers gestaltet ist.

11. System gemäß Anspruch 1, wobei die genannte entfernt betriebene Befestigungsvorrichtung ein Antriebssystem umfasst, wobei das genannte Antriebssystem zum Handhaben der genannten entfernt betriebenen Befestigungsvorrichtung innerhalb des Gewässers geeignet ist.

12. System gemäß Anspruch 1, wobei die genannte entfernt betriebene Befestigungsvorrichtung eine Gewichtsfeststellungsvorrichtung umfasst, wobei die genannte Gewichtsfeststellungsvorrichtung zum Feststellen des genannten wenigstens einen Gewichts auf dem Boden des Gewässers geeignet ist.

13. System gemäß Anspruch 1, wobei die genannte entfernt betriebene Befestigungsvorrichtung das genannte wenigstens eine Gewicht unter Verwenden eines drahtlosen Ortungssystems ortet.

14. System gemäß Anspruch, wobei das genannte drahtlose Positionierungssystem einen Sender umfasst, der der genannten entfernt betriebenen Befestigungsvorrichtung zugeordnet ist und mit einem Empfänger kommuniziert, der dem genannten wenigstens einen Gewicht zugeordnet ist.

15. System gemäß Anspruch 14, wobei das genannte drahtlose Positionierungssystem weiterhin Positionierungs-Funkbaken auf dem Boden des Gewässers umfasst.

16. System gemäß Anspruch 1, wobei das genannte wenigstens eine Gewicht zum Enthalten und Steuern eines Luftballastes derart geformt ist, dass es im Wesentlichen schwimmfähig ist.

17. System gemäß Anspruch 1, wobei das genannte wenigstens eine Gewicht zum Minimieren der Zugkräfte während der Bewegung zwischen der ersten und zweiten Erhöhungsposition geformt ist.

18. System gemäß Anspruch 1, wobei die genannte Plattform ein Hebegewicht-Verwaltungssystem umfasst, wobei das genannte Hebegewicht-Verwaltungssystem zum Speichern und Vorbereiten einer Vielzahl von Gewichten des genannten wenigstens einen Gewichts gestaltet ist.

19. System gemäß Anspruch 18, wobei das genannte Hebegewicht-Verwaltungssystem zum Befestigen und Lösen der genannten Vielzahl von Gewichten von dem genannten Hebezeugsystem gestaltet ist

20. Hebegewicht gemäß Anspruch 18, wobei das genannte System zum sequentiellen Senken jedes der genannten Vielzahl von Gewichten von der genannten Plattform auf den Boden des Gewässers gestaltet ist.

## Revendications

1. Système (200) permettant de stocker et de libérer de l'énergie, dans lequel ledit système est déployé dans une masse d'eau, ledit système comprenant : une plate-forme (220) ;
des poids multiples (204) stockés sur un plancher de la masse d'eau ; un système de treuil (202), ledit système de treuil étant en mesure de déplacer au moins un poids entre une première position d'élévation et une deuxième position d'élévation ; et
un dispositif de fixation à télécommande (203) accouplé au dit système de treuil (202), ledit dispositif de fixation à télécommande étant configuré à des fins de repérage et d'accouplement au au moins un poids sur le plancher de la masse d'eau,
ledit système de treuil (202) soulève et abaisse de manière sélective au moins un poids (204) quand il est couplé au dit dispositif de fixation à télécommande (203) depuis la première position d'élévation jusqu'à la deuxième position d'élévation,
ledit système stocke et libère de l'énergie quand au moins un poids se déplace entre la première position d'élévation et la deuxième position d'élévation,
**caractérisé en ce que** ladite plate-forme est en mesure de se déplacer sur la masse d'eau de telle sorte que lesdits poids multiples peuvent être situés à différents endroits sur le plancher de la masse d'eau.

2. Système selon la revendication 1, dans lequel ladite plate-forme est en mesure de se déplacer sur la masse d'eau et ledit système est configuré à des fins de repérage et d'accouplement à un premier poids desdits au moins un poids situé au niveau desdites premières coordonnées sur le plancher de la masse d'eau et un deuxième poids desdits au moins un poids situé au niveau desdites secondes coordonnées sur le plancher de la masse d'eau.

3. Système selon la revendication 1, dans lequel ledit système de treuil comprend :
un élément de tension ayant une longueur avec une première extrémité et une seconde extrémité, ledit élément de tension étant en mesure de supporter ledit au moins un poids quand ledit au moins un poids est accouplé au dit élément de tension pour permettre un mouvement entre la première position d'élévation et la deuxième position d'élévation ; et
un système de treuil monté sur ladite plate-forme, ledit système de treuil étant accouplé de manière opérationnelle à la première extrémité dudit élément de tension, ledit système de treuil étant configuré aux fins du réglage de la longueur de l'élément de tension d'une manière contrôlée.

4. Système selon la revendication 1, dans lequel la première position d'élévation est inférieure à la deuxième position d'élévation, et ledit système comprend en outre :
un moteur/générateur, ledit moteur/générateur étant couplé de manière opérationnelle au dit système de treuil, dans lequel ledit moteur/générateur stocke de l'énergie lors du déplacement dudit au moins un poids depuis la première position d'élévation jusqu'à la deuxième position d'élévation et génère de l'énergie permettant de déplacer ledit au moins un poids depuis la deuxième position d'élévation jusqu'à la première position d'élévation.

5. Système selon la revendication 4, dans lequel ledit système libère de l'énergie à un réseau électrique par l'intermédiaire dudit moteur/générateur.

6. Système selon la revendication 1, dans lequel ledit système est configuré aux fins de repérage d'une pluralité de poids situés sur le plancher de la masse d'eau suivant un premier motif, de levage de ladite pluralité de poids depuis le plancher de la masse d'eau jusqu'à ladite plate-forme, et de stockage de ladite pluralité de poids sur ladite plate-forme suivant un deuxième motif.

7. Système selon la revendication 6, dans lequel ladite plate-forme est configurée aux fins de son déplacement sur la masse d'eau jusqu'à des positions sur le premier motif de la pluralité de poids.

8. Système selon la revendication 7, dans lequel ledit dispositif de fixation à télécommande est configuré aux fins de son déplacement par rapport à ladite plate-forme afin de faciliter le repérage, l'accouplement et le levage de ladite pluralité de poids depuis le plancher de la masse d'eau.

9. Système selon la revendication 1, dans lequel ledit système est configuré aux fins de l'abaissement d'une pluralité de poids depuis ladite plate-forme jusqu'au plancher de la masse d'eau, dans lequel ladite pluralité de poids définit un motif sur le plancher de la masse d'eau.

10. Système selon la revendication 9, dans lequel ladite plate-forme est configurée aux fins de son déplacement sur la masse d'eau pour faciliter la définition du motif de la pluralité de poids sur le plancher de la masse d'eau.

11. Système selon la revendication 1, dans lequel ledit dispositif de fixation à télécommande comprend un système de propulsion, ledit système de propulsion étant en mesure de manoeuvrer ledit dispositif de fixation à télécommande au sein de la masse d'eau.

12. Système selon la revendication 1, dans lequel ledit dispositif de fixation à télécommande comprend un dispositif de détection de poids, ledit dispositif de détection de poids étant en mesure de détecter ledit au moins un poids sur le plancher de la masse d'eau.

13. Système selon la revendication 1, dans lequel ledit dispositif de fixation à télécommande repère ledit au moins un poids en utilisant un système de positionnement sans fil.

14. Système selon la revendication 13, dans lequel ledit système de positionnement sans fil comprend un émetteur associé au dit dispositif de fixation à télécommande communiquant avec un récepteur associé au dit au moins un poids.

15. Système selon la revendication 14, dans lequel ledit système de positionnement sans fil comprend en outre le positionnement de balises sur le plancher de la masse d'eau.

16. Système selon la revendication 1, dans lequel ledit au moins un poids est conçu avec une forme lui permettant de contenir et de commander un ballast d'air de manière à être sensiblement flottant.

17. Système selon la revendication 1, dans lequel ledit au moins un poids est conçu avec une forme lui permettant de réduire au minimum les forces de traînée pendant le mouvement entre la première et la deuxième position d'élévation.

18. Système selon la revendication 1, dans lequel ladite plate-forme comprend un système de gestion de masse totale, ledit système de gestion de masse totale étant configuré aux fins du stockage et de la préparation d'une pluralité de poids desdits au moins un poids.

19. Système selon la revendication 18, dans lequel ledit système de gestion de masse totale est configuré de la fixation et de la libération de ladite pluralité de poids au dit/dudit système de treuil.

20. Système selon la revendication 18, dans lequel ledit système est configuré aux fins de l'abaissement, de manière séquentielle, de chacun de ladite pluralité de poids depuis ladite plate-forme jusqu'au plancher de la masse d'eau.
